# EUROPÄISCHE PATENTANMELDUNG

(11) **EP 3 936 267 A1**
(43) Veröffentlichungstag der Anmeldung: **12.01.2022**
(21) Anmeldenummer: 21180328.3
(22) Anmeldetag: 18.06.2021
(51) Int. Cl.: B23B 51/02, B25D 17/02

(54) **EINSATZWERKZEUG**

(30) Priorität: 09.07.2020 DE 102020208607
(71) Anmelder: Robert Bosch GmbH, 70442 Stuttgart (DE)
(72) Erfinder: Anghileri, Massimo, 4500 Solothurn (CH)

(57) **Zusammenfassung**

Die Erfindung betrifft ein Einsatzwerkzeug, insbesondere ein Bohrwerkzeug, mit einem Basismodul, wobei das Basismodul einen insbesondere eine Förderwendel umfassenden ersten Abschnitt und einen Schneidkörper mit vorzugsweise zumindest zwei Spanflächen umfassenden zweiten Abschnitt aufweist, wobei der zweite Abschnitt stoffschlüssig mit einem ersten Ende des ersten Abschnitts verbunden ist. Es wird vorgeschlagen, dass das Basismodul an einem zweiten Ende mit einem insbesondere gehärteten Einsteckende stoffschlüssig über insbesondere ein Reibschweißverfahren verbunden ist.

## Beschreibung

Der Herstellungsprozess von Bohrwerkzeugen ist komplex. Ausgehend von einem Rohling wird zunächst der Schaft auf die Werkzeugaufnahme der vorgesehenen Handwerkzeugmaschinen angepasst. Im Weiteren wird Förderwendel hergestellt, der Bohrkopf muss verbunden und/oder geschliffen werden und eventuell wird das Bohrwerkzeug noch eingefärbt. Hierdurch ist der Herstellungsprozess für Bohrwerkzeuge sehr kostenintensiv.

### Offenbarung der Erfindung

Die Erfindung betrifft ein Einsatzwerkzeug, insbesondere ein Bohrwerkzeug, mit einem Basismodul, wobei das Basismodul einen insbesondere eine Förderwendel umfassenden ersten Abschnitt und einen einen Schneidkörper mit vorzugsweise zumindest zwei Spanflächen umfassenden zweiten Abschnitt aufweist, wobei der zweite Abschnitt stoffschlüssig mit einem ersten Ende des ersten Abschnitts verbunden ist. Es wird vorgeschlagen, dass das Basismodul an einem zweiten Ende mit einem insbesondere gehärteten Einsteckende stoffschlüssig über insbesondere ein Reibschweißverfahren verbunden ist. Vorteilhaft kann dadurch die Komplexität des Herstellungsprozesses reduziert werden. In einem ersten Schritt wird das Basismodul produziert und in einem zweiten Schritt wird das Einsatzwerkzeug über das Einsteckende, ein Schneidkörperdesign und eine Einfärbung individualisiert.

Das Bohrwerkzeug ist insbesondere als ein Gesteinsbohrer ausgebildet, der für einen Bohrhammer vorgesehen ist. Alternativ ist ebenso denkbar, dass das Bohrwerkzeug als ein Metallbohrer, Holzbohrer oder als ein Fliesenbohrer ausgebildet ist.

Der erste Abschnitt weist insbesondere einen Grundkörper auf. Der erste Abschnitt ist vorzugsweise einteilig oder einstückig ausgebildet, sodass der erste Abschnitt von dem Grundkörper gebildet wird. Unter einstückig soll im Zusammenhang dieser Anmeldung insbesondere ein einzelnes Bauteil verstanden werden, welches keine wie auch immer geartete Verbindung zu anderen Bauteilen, beispielsweise über einen Stoffschluss, aufweist. Ein einstückiges Bauteil besteht aus einem Material. Unter einteilig soll im Zusammenhang dieser Anmeldung insbesondere auch Bauteile verstanden werden, die mehrere Komponenten aufweisen, welche stoffschlüssig miteinander verbunden sind. Ein einteiliges Bauteil kann aus einem oder mehreren Materialien bestehen.

Der erste Abschnitt, insbesondere der Grundkörper, ist vorzugsweise aus einem Schnellarbeitsstahl oder einem zum härten geeigneten Stahl, wie beispielsweise 42CrMo4, 46CrB2, 41Cr, 34CrNiMo16 oder C45, C50 ausgebildet. Der Grundkörper weist vorzugsweise eine Härte im Bereich zwischen 48 und 56 HRC (Hardness Rockwell C) auf. Die Förderwendel kann derart ausgebildet sein, dass sie sich geradlinig oder spiralförmig um eine Längsachse des Bohrwerkzeugs erstreckt. Die Förderwendel weist dabei zumindest eine Nut auf. Es ist ebenso denkbar, dass die Förderwendel mehrere Nuten, beispielsweise zwei, drei oder vier Nuten aufweist, wobei sich die Nuten vorzugsweise gleichmäßig beabstandet zueinander entlang oder um die Längsachse des Bohrwerkzeugs erstrecken. Alternativ ist auch denkbar, dass der erste Abschnitt keine Förderwendel aufweist.

Der zweite Abschnitt ist insbesondere einteilig ausgebildet, sodass der zweite Abschnitt von dem Schneidkörper gebildet wird. Der Schneidkörper weist eine Spitze auf, mit der das Einsatzwerkzeug bzw. das Bohrwerkzeug bei Benutzung auf das zu bearbeitende Werkstück aufgesetzt bzw. angelegt wird. Die Spitze kann beispielsweise als eine Querschneide ausgebildet sein. Der Schneidkörper ist insbesondere aus einem Hartmetall ausgebildet. Alternativ wäre ebenso denkbar, dass der erste Abschnitt und der zweite Abschnitt bzw. der Grundkörper und der Schneidkörper einstückig ausgebildet sind. Insbesondere weist der zweite Abschnitt eine höhere Härte auf, als der erste Abschnitt. Vorzugsweise weist der Schneidkörper eine höhere Härte auf, als der Grundkörper. Der Schneidkörper weist bevorzugt zwei Schneidkanten auf. Die erste und die zweite Schneidkante sind vorzugsweise als Hauptschneidkanten ausgebildet. Insbesondere bilden die Schneidkanten jeweils einen Übergang zwischen einer Spanfläche und einer Freifläche. Die zwei Schneidkanten sind insbesondere auf unterschiedlichen Seiten des Schneidkörpers angeordnet, wobei die Seiten durch eine Ebene entlang der Mittelachse des Schneidkörpers getrennt sind. Die Schneidkanten erstrecken sich zumindest abschnittsweise im Wesentlichen geradlinig. Der Keilwinkel der ersten und/oder der zweiten Schneidkante liegt insbesondere in einem Bereich zwischen 60° und 120°, vorzugsweise in einem Bereich zwischen 80° und 100°. Bevorzugt beträgt der Keilwinkel im Wesentlichen 90°. Vorzugsweise ist der Keilwinkel der ersten Schneidkante und der zweiten Schneidkante im Wesentlichen zumindest abschnittsweise, bevorzugt vollständig, identisch. Der Anfangspunkt der Schneidkante liegt insbesondere im Bereich der Spitze. Vorzugsweise bildet der Anfangspunkt zumindest teilweise die Spitze des Schneidkörpers. Der Endpunkt der ersten Schneidkante und/oder der zweiten Schneidkante ist vorzugsweise auf einem radial äußeren Rand des Schneidkörpers angeordnet.

Das Einsteckende ist insbesondere einteilig oder einstückig ausgebildet. Das Einsteckende ist vorzugsweise aus einem Stahl ausgebildet. Insbesondere ist das Einsteckende aus dem gleichen Material wie der Grundkörper ausgebildet. Das Einsteckende wird vor der Verbindung mit dem Basismodul gehärtet. Der hierfür nötige Härteprozess wird insbesondere mittels eines Ofens durchgeführt und ist bereits bekannt. Das Einsteckende und der Grundkörper sind somit nach dem Verbindungsprozess einteilig, nicht aber einstückig miteinander ausgebildet. Vorteilhaft kann dadurch das Einsteckende ohne den Grundkörper im Ofen gehärtet werden, wodurch eine größere Anzahl an Einsteckenden pro Härteprozess gehärtet werden können. Das Einsteckende ist zur Kopplung mit einer Handwerkzeugmaschine, wie beispielsweise einem Bohrhammer oder Schlaghammer, ausgebildet ist. Vorzugsweise ist das Bohrwerkzeug im Bereich des Einsteckendes derart ausgebildet, dass das Bohrwerkzeug mit einer Werkzeugaufnahme der Handwerkzeugmaschine koppelbar ist. Beispielhaft kann Einsteckende als spezielle Nuten ausgebildete Formschlusselemente aufweisen, die eine SDS-plus-Schnittstelle oder eine SDS-max-Schnittstelle bilden. Das Einsteckende kann auch als ein Zylinderschaft, insbesondere ein Rundschaft oder als ein Zylinderschaft mit Fase, vorzugsweise drei Fasen, ausgebildet sein. Alternativ kann das Einsteckende auch als ein Außenkantschaft, insbesondere als ein 4-Kant oder als ein 6-Kant bzw. Hex-Schaft, ausgebildet sein. Zur Bearbeitung eines Werkstücks wird das Bohrwerkzeug mittels des Bohrhammers in einen rotierenden sowie linear oszillierenden bzw. schlagenden Zustand versetzt. Das Bohrwerkzeug dringt während der Bearbeitung in Vorschubrichtung in das Werkstück ein. Die Vorschubrichtung des Bohrwerkzeugs verläuft koaxial zur Längsachse oder Rotationsachse und ausgehend von dem Einsteckende in Richtung des Schneidkörpers. Die Längsachse des Bohrwerkzeug entspricht insbesondere einer Arbeits- oder Rotationsachse des Bohrwerkzeug.

Unter einem Reibschweißverfahren soll insbesondere ein Verfahren verstanden werden, bei dem zwei Bauteile unter Druck relativ zueinander bewegt werden, wobei sich die Kontaktflächen berühren. Die reibungsbedingte Erwärmung führt zu einer Plastifizierung des Materials und zur Verbindung der Bauteile.

Das Einsatzwerkzeug kann beispielsweise als ein Gesteinsbohrer Ausgebildet sein, wobei eine Härte des Schneidkörpers größer ist als eine Härte des Einsteckendes, wobei die Härte des Einsteckendes größer ist, als eine Härte des Grundkörpers.

Alternativ kann das Einsatzwerkzeug beispielsweise auch als ein Metallbohrwerkzeug ausgebildet sein, wobei eine Härte des Schneidkörpers im Wesentlichen der Härte des Einsteckendes entspricht, wobei die Härte des Schneidkörpers größer ist, als eine Härte des Grundkörpers.

Vorteilhaft kann basierend auf dem gleichen Basismodul sowohl ein Gesteinsbohrer, ein Metallbohrer, ein Fliesenbohrer, ein Holzbohrer, etc. hergestellt werden.

Des Weiteren wird vorgeschlagen, dass der Schneidkörper zumindest teilweise, insbesondere vollständig, aus Hartmetall besteht. Insbesondere besteht der Schneidkörper aus Wolframcarbid.

Weiterhin wird vorgeschlagen, dass der Schneidkörper über ein Schleifverfahren derart bearbeitet ist, dass der Schneidkörper zumindest zwei Schleifflächen aufweist, wobei zumindest zwei Schleifflächen als Spanflächen ausgebildet sind. Vorteilhaft kann dadurch die Abtragsleistung der Einsatzwerkzeuge erhöht werden. Insbesondere ist zumindest eine Schleiffläche als eine Freifläche ausgebildet ist. Vorzugsweise weist der Schneidkörper zumindest 4 oder zumindest 7 Schleifflächen auf. Die Schleifflächen können beispielsweise manuell oder automatisch mittels einer Maschine hergestellt werden.

Zudem betrifft die Erfindung ein System aus zumindest einem ersten Einsatzwerkzeug und einem zweiten Einsatzwerkzeug wie zuvor beschrieben, wobei die Basismodule der Einsatzwerkzeuge im Wesentlichen identisch ausgebildet sind. Es wird vorgeschlagen, dass die Basismodule der Einsatzwerkzeuge mit unterschiedliche Einsteckenden stoffschlüssig verbunden sind und/oder die Schneidkörper über unterschiedliche Schleifverfahren bearbeitet sind. Vorteilhaft kann dadurch basierend auf dem Basismodul unterschiedliche Bohrwerkzeuge bereitgestellt werden.

Des Weiteren wird vorgeschlagen, dass die Einsatzwerkzeuge sich unterscheidende Oberflächenkennzeichnungen aufweisen. Vorteilhaft können einem Benutzer dadurch zusätzliche Informationen bereitgestellt werden. Die Oberflächenkennzeichnung ist insbesondere dazu ausgebildet, eine Information bezüglich des Typs, des Verschleißzustands, der Länge und/oder der Breite des Einsatzwerkzeugs bereitzustellen. Die Oberflächenkennzeichnung kann beispielsweise als zumindest eine Farbe ausgebildet sein, die auf das Einsatzwerkzeug, insbesondere im Bereich der Förderwendel, aufgetragen wird. Mit zunehmenden Verschleiß wird die Farbe abgetragen und der Benutzer kann somit über die Farbe den Verschleißzustand ermitteln. Es wäre auch denkbar, dass die Oberflächenkennzeichnung mehrere Farben aufweist, die entlang der axialen Erstreckung des Einsatzwerkzeugs alternieren und dazu ausgebildet sind, eine Bohrlochtiefe anzuzeigen. Beispielsweise können die ersten zwei cm ausgehend von der Spitze blau, die nächsten zwei cm rot und die folgenden zwei cm grün eingefärbt sein. Auf diese Weise hat ein Benutzer unmittelbar durch den Blick auf das Bohrwerkzeug einen Hinweis auf die vorliegende Bohrlochtiefe während des Bohrvorgangs. Die Oberflächenkennzeichnung kann auch als ein Code, insbesondere ein Barcode, ausgebildet sein. Der Code ist dazu vorgesehen, eine eindeutige Identifikation bereitzustellen. Der Code kann beispielsweise von der der Handwerkzeugmaschine, einem Zubehör für die Handwerkzeugmaschine oder einem externen Gerät, wie beispielsweise einem Smartphone, eingelesen werden. Vorteilhaft kann dadurch beispielsweise die Handwerkzeugmaschine mit einem für das Einsatzwerkzeug zugelassenen Betriebsparameterbereich oder einem optimalen Betriebsparameter eingestellt werden.

Die Oberflächenkennzeichnung kann beispielsweise über ein Tintendruckverfahren hergestellt werden. Die Oberflächenkennzeichnung kann dabei im Bereich des ersten Abschnitts, insbesondere vor oder auf der Förderwendel, im Bereich des zweiten Abschnitts oder im Bereich des Einsteckendes aufgebracht werden.

Die Bedruckung erfolgt bevorzugt automatisiert über eine Maschine, in welcher die Einsatzwerkzeuge über das Einsteckende eingespannt werden. Um eine präzise Bedruckung zu ermöglichen, erfolgt die Bedruckung unter Zuhilfenahme eines Raster Image Processor (kurz RIP). Zur Beschleunigung der Trocknung werden die Einsatzwerkzeuge nach dem Druckvorgang mittels einer UV-Lampe getrocknet. Vorzugsweise kann über das Tintendruckverfahren nur die Förderwendel allein bedruckt werden, ohne dass Farbe auf den Schneidkörper platziert wird. Vorteilhaft kann dadurch auf ein Schleifen des Schneidkörpers nach dem Tintendruckverfahren verzichtet werden.

Weiterhin betrifft die Erfindung ein Verfahren zur Herstellung eines Einsatzwerkzeugs, in welchem in einer ersten Verfahrensstufe ein Basismodul, das einen insbesondere eine Förderwendel umfassenden Grundkörper und einen Schneidkörper aufweist, bereitgestellt wird und in einer zweiten Verfahrensstufe über jeweils zumindest einen Verfahrensschritt der Grundkörper auf eine Handwerkzeugmaschine, auf ein zu bearbeitendes Werkstück und mit einer Oberflächenkennzeichnung angepasst wird. Die Anpassung des Grundkörpers auf die Handwerkzeugmaschine erfolgt dabei über die Wahl des für die Handwerkzeugmaschine geeigneten Einsteckendes. Die Anpassung auf das zu bearbeitende Werkstück erfolgt dabei durch die Wahl ob der Schneidköper geschliffen wird und falls ja, wie viele Schleifflächen dieser benötigt. Die Anpassung auf das zu bearbeitende Werkstück kann zusätzlich oder alternativ auch über eine Beschichtung des Schneidkörpers erfolgen. Es ist beispielsweise denkbar, dass der Schneidkörper mit ein Beschichtung versehen wird, die eine größere Härte aufweise, als der Schneidkörper, was die Verschleißbeständigkeit verbessert.

Zudem wird vorgeschlagen, dass ein Datensatz, der Informationen zur Anpassung des Basismoduls auf eine Handwerkzeugmaschine, auf ein zu bearbeitendes Werkstück und der Oberflächenkennzeichnung von einer Recheneinheit bereitgestellt wird oder einer Recheneinheit bereitgestellt wird. Vorteilhaft kann dadurch eine automatische Produktion individualisierter Einsatzwerkzeuge bereitgestellt werden.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Bezugszeichen von Merkmalen unterschiedlicher Ausführungsformen der Erfindung, die sich im Wesentlichen entsprechen, werden mit derselben Zahl und mit einem die Ausführungsform kennzeichnenden Buchstaben versehen.

Es zeigen:
Fig. 1 eine Seitenansicht eines Basismoduls für ein erfindungsgemäßes Einsatzwerkzeug;
Fig. 2a-d Seitenansichten diverser Ausführungsformen von Einsteckenden für das erfindungsgemäßes Einsatzwerkzeug;
Fig. 3a-c perspektivische Ansichten diverser Ausführungsformen von geschliffenen Schneidkörpern des erfindungsgemäßen Schneidkörpers;
Fig. 4 ein Flussdiagramm eines Herstellungsverfahrens für das Einsatzwerkzeug;
Fig. 5 eine Seitenansicht eines erfindungsgemäßen Einsatzwerkzeugs.

### Beschreibung der Ausführungsbeispiele

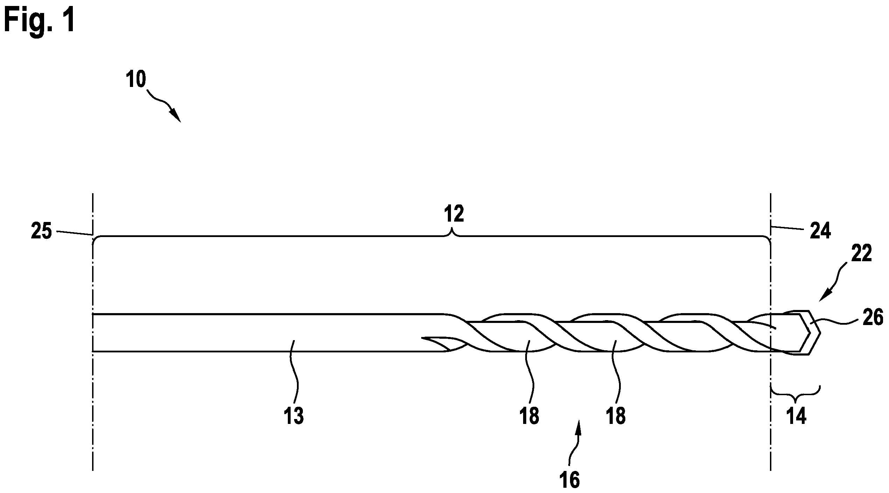

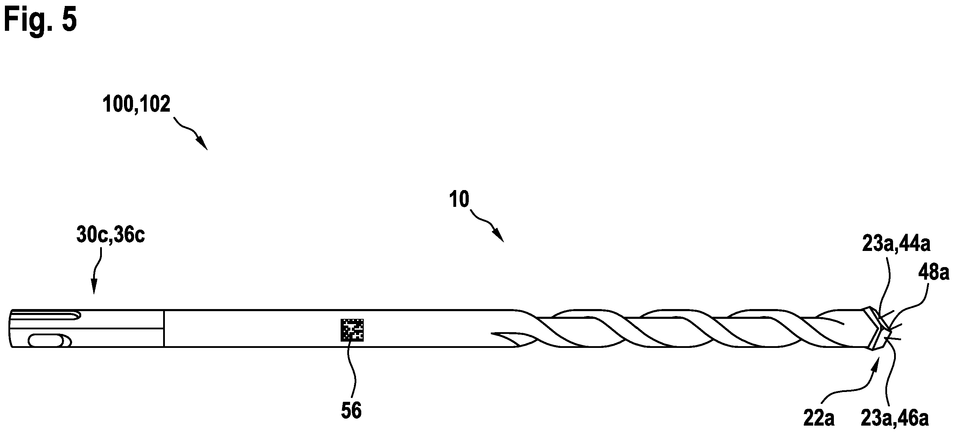

In Figur 1 ist eine Seitenansicht eines Basismoduls 10 gezeigt. Das Basismodul 10 ist für ein Einsatzwerkzeug 100 vorgehsehen, das beispielhaft als ein Gesteinsbohrer 102 ausgebildet ist (siehe Fig. 5). Das Basismodul 10 weist einen ersten Abschnitt 12 und einen zweiten Abschnitt 14 auf.

Der erste Abschnitt 12 umfasst einen Grundkörper 13 und ist beispielhaft einstückig ausgebildet. Der erste Abschnitt 12 besteht beispielhaft aus Stahl. Der erste Abschnitt 12 weist eine Förderwendel 16 auf, die beispielsweise 2-gänging ausgebildet ist. Die Förderwendel 16 weist somit zwei Nuten 18 auf, die sich spiralförmig um die Längsachse 20 des Basismoduls 10 erstrecken. Die Förderwendel 16 erstreckt sich beispielhaft entlang ca. 50 % der Länge des Basismoduls 10 und ausgehend von der Mitte bis zum Beginn des zweiten Abschnitts 14. Der dem zweiten Abschnitt 14 abgewandte Bereich des Grundkörpers 13 weist eine zylindrische Mantelfläche ohne Nuten auf.

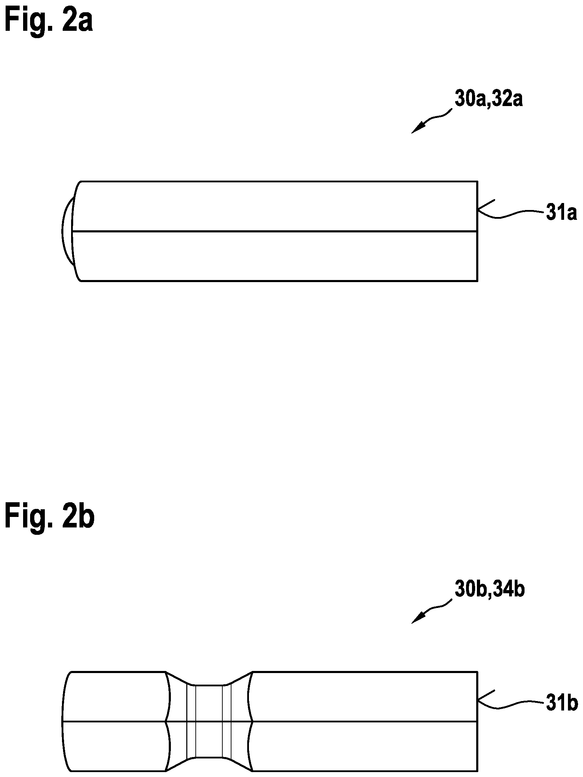

Der zweite Abschnitt 14 umfasst einen Schneidkörper 22, der beispielshaft aus einem Hartmetall besteht. Der Schneidkörper weist somit eine größere Härte auf, als der Grundkörper 13. Der Schneidkörper 22 besteht beispielhaft aus Wolframcarbid. Alternativ wären auch andere Hartmetalle denkbar. Der Schneidkörper 22 ist an einem ersten Ende 24 des ersten Abschnitts 12 stoffschlüssig mit diesem verbunden. Der Grundkörper 13 weist im Bereich des ersten Endes 24 eine Ausnehmung auf, in die der als Hartmetallplättchen 26 ausgebildeter Schneidkörper 22 eingesetzt und verlötet oder verschweißt wird. Alternativ wäre auch denkbar, dass der Schneidkörper 22 als ein Vollhartmetallkopf ausgebildet ist. In diesem Fall weist der Grundkörper 13 keine Ausnehmung, sondern lediglich eine ebene Fügefläche auf, die zur stoffschlüssigen Verbindung vorgesehen ist. Das zweite Ende 25 des ersten Abschnitts 12 beziehungsweise des Grundkörpers 13 ist auf einer dem Schneidkörper 22 abgewandten Seite angeordnet. Das zweite Ende 25 ist zur stoffschlüssigen Verbindung des Basismoduls 10 mit einem Einsteckende 30 (siehe Figur 2a-d) vorgesehen.

Um eine hohe Haltbarkeit bei der Abtragung von Gestein zu erzielen, ist eine Ausbildung des Schneidkörpers 22 aus Hartmetall sehr vorteilhaft. Ist das Basismodul 10 für ein Einsatzwerkzeug 100 vorgesehen, das als ein Metallbohrer ausgebildet ist, so wäre es auch denkbar, dass der Grundkörper und der Schneidkörper einstückig ausgebildet sind und somit aus demselben Material geformt sind.

In Fig. 2a bis Fig. 2d sind beispielhaft diverse Einsteckenden 30a - 30d gezeigt, die zur Herstellung des Einsatzwerkzeugs 100 mit dem Basismodul 10 über ein Reibschweißverfahren verbunden werden. Zur Verbindung mit dem Basismodul 10 weisen die Einsteckenden 30a - 30d jeweils eine ebene Fügefläche 31a -31d auf, die sich im Wesentlichen senkrecht zu der Längsachse 20 des Basismoduls 10 bzw. des Einsatzwerkzeugs 100 erstreckt.

In Fig. 2a ist eine Seitenansicht eines Einsteckende 30a gezeigt, das als ein zylindrischer Schaft 32a ausgebildet ist. Als Bohrmaschinen ausgebildete Handwerkzeugmaschinen weisen häufig hierfür passende Werkzeugaufnahmen auf.

In Fig. 2b ist eine Seitenansicht eines Einsteckendes 30b gezeigt, das als ein ¼" - Sechskantschaft 34b ausgebildet ist. Als Akkuschrauber ausgebildete Handwerkzeugmaschinen weisen häufig die hierfür passende Werkzeugaufnahme auf.

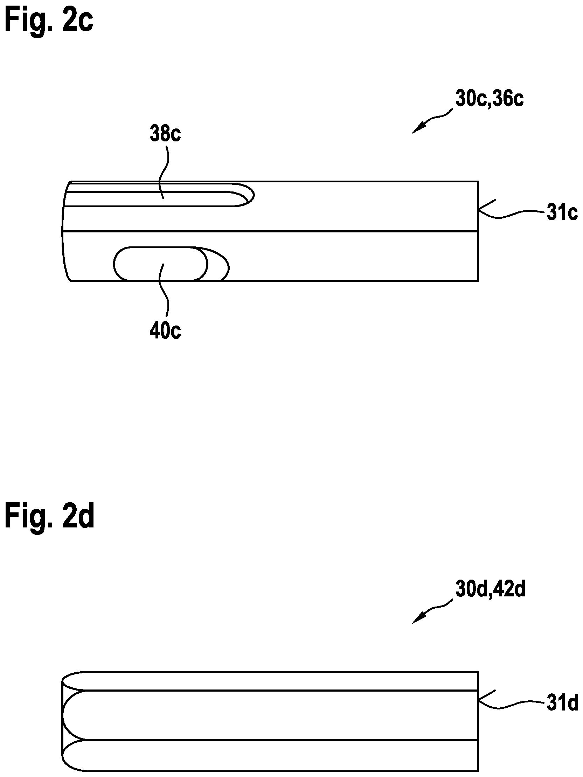

In Fig. 2c ist eine Seitenansicht eines Einsteckendes 30c gezeigt, das als ein SDS-plus Schaft 36c ausgebildet ist. Der SDS-plus Schaft 36c weist zwei gegenüberliegende offene Nuten 38c auf, die auf einer der Fügefläche 31c abgewandten Seite des Einsteckendes 30c angeordnet sind. Zudem weist der SDS-plus Schaft 36c zwei geschlossene Nuten 40c auf, die in Umfangsrichtung zwischen den offenen Nuten 38c angeordnet sind. Als Bohrhammer ausgebildete Handwerkzeugmaschinen weisen häufig die hierfür passende Werkzeugaufnahme auf.

In Fig. 2d ist eine Seitenansicht eines Einsteckendes 30d gezeigt, das als ein Sechskantschaft 42d ausgebildet ist. Als schwere Abbruchhämmer ausgebildete Handwerkzeugmaschinen weisen häufig die dafür passende Werkzeugaufnahme auf.

Als kostengünstige Alternative ist ebenso denkbar, auf einen Schleifvorgang zu verzichten und den Schneidkörper 22 wie in Fig. 1 gezeigt zu belassen.

Alternativ sind auch weitere Einsteckenden, die für Werkzeugaufnahmen für Handwerkzeugmaschinen vorgesehen sind, denkbar.

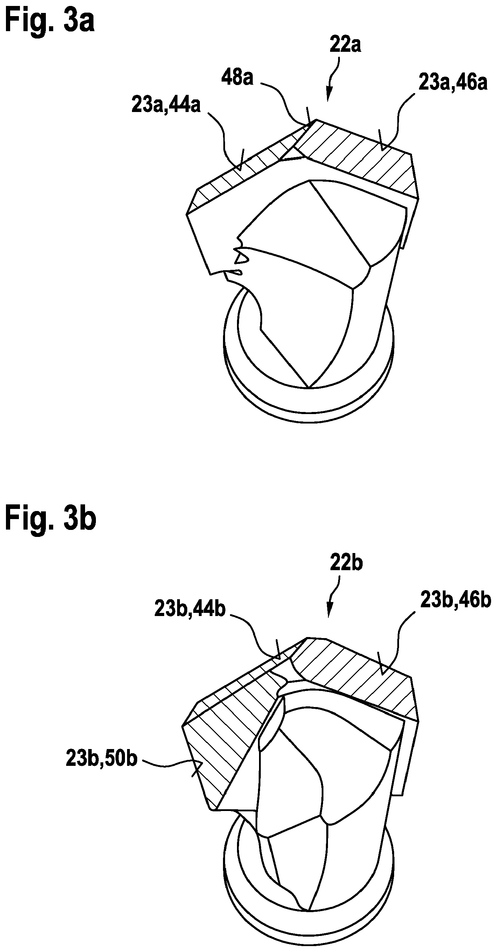

In Fig. 3a bis Fig. 3c sind jeweils Schneidkörper 22 des Basismoduls 10 gezeigt, die mittels eines Schleifverfahrens geschliffen worden sind.

Der Schneidkörper 22a in Fig. 3a weist beispielhaft zwei Schleifflächen 23a auf, eine erste Schleiffläche 44a und eine zweite Schleiffläche 46a. Die beiden Schleifflächen 44a, 46a erstrecken sich dabei ausgehend von einer Querschneide 48a des Schneidkörpers 22a. Die beiden Schleifflächen 23a können beispielsweise per Hand oder automatische mittels einer Maschine geschliffen werden.

Der Schneidkörper 22b weist beispielhaft vier Schleifflächen 23b auf. In der perspektivischen Ansicht gemäß Fig. 3b sind von den vier Schleifflächen 23b nur die erste, die zweite und eine dritte Schleiffläche 44b, 46b, 50b gezeigt.

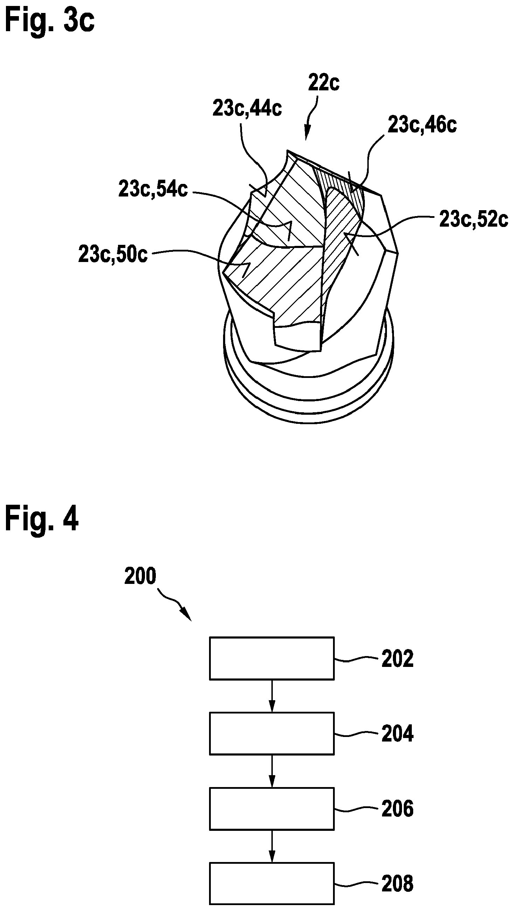

Der Schneidkörper 22c weist beispielhaft sieben Schleifflächen 23c auf. In der perspektivischen Ansicht gemäß Fig. 3c sind von den sieben Schleifflächen 23c nur die erste, die zweite, die dritte, die vierte und die fünfte Schleiffläche 46c, 48c, 50c, 52c, 54c gezeigt.

In Fig. 4 ist ein Flussdiagram 200 zur Herstellung des erfindungsgemäßen Einsatzwerkzeugs 100 gezeigt.

In einer ersten Verfahrensstufe 202 wird ein Basismodul 10, der einen eine Förderwendel 16 umfassenden Grundkörper 13 und einen Schneidkörper 22 aufweist, bereitgestellt. In einer zweiten Verfahrensstufe wird über jeweils einen Verfahrensschritt das Basismodul 10 auf eine Handwerkzeugmaschine angepasst 204, das Basismodul 10 auf ein zu bearbeitendes Werkstück angepasst 206 und das Basismodul 10 mit einer Oberflächenkennzeichnung angepasst 208. Die dargestellte Reihenfolge der Verfahrensschritte 204, 206, 208 der zweiten Verfahrensstufe sind besonders vorteilhaft. Es wäre allerdings auch denkbar, dass die Verfahrensschritte in einer anderen Folge ablaufen oder Verfahrensschritte weggelassen oder hinzugefügt werden.

In Fig. 5 ist beispielhaft ein Basismodul 10 mit den Verfahrensschritten gemäß Fig. 4 angepasst worden. Das Basismodul 10 ist stoffschlüssig mittels eines Reibschlussverfahren mit dem Einsteckende 30c verbunden und somit für als Bohrhämmer ausgebildete Handwerkzeugmaschinen vorgesehen. Der aus Hartmetall bestehende Schneidkörper 22a ist über ein Schleifverfahren geschliffen und weist zwei Schleifflächen 23a auf. Bereits mit den in Fig. 3a-d gezeigten vier Einsteckenden und den in Fig. 3a-c gezeigten drei Schleifvariationen plus den ungeschliffenen Schneidkörper ergeben sich 16 unterschiedliche Einsatzwerkzeuge, die basierend auf dem Basismodul herstellbar sind. Insbesondere sind basierend auf dem Basismodul sowohl Gesteinsbohrer, Metallbohrer als auch Fliesenbohrer herstellbar. Das Einsatzwerkzeug 100 weist eine Oberflächenkennzeichnung 56 auf, die beispielhaft als 3D Code ausgebildet ist. Die Oberflächenkennzeichnung 56 ist mittels eines RIP Tintendruckverfahrens als letzter Schritt des Herstellungsverfahrens aufgetragen worden.

## Patentansprüche

1. Einsatzwerkzeug, insbesondere ein Bohrwerkzeug, mit einem Basismodul (10), wobei das Basismodul (10) einen insbesondere eine Förderwendel (16) umfassenden ersten Abschnitt (12) und einen einen Schneidkörper (22) mit vorzugsweise zumindest zwei Spanflächen umfassenden zweiten Abschnitt (14) aufweist, wobei der zweite Abschnitt (14) stoffschlüssig mit einem ersten Ende (24) des ersten Abschnitts (12) verbunden ist,
**dadurch gekennzeichnet, dass**
das Basismodul (10) an einem zweiten Ende (25) des ersten Abschnitts (12) mit einem insbesondere gehärteten Einsteckende (30a-d) stoffschlüssig insbesondere über ein Reibschweißverfahren verbunden ist.

2. Einsatzwerkzeug nach Anspruch 1, **dadurch gekennzeichnet, dass** das Einsteckende (30a-d) als ein Zylinderschaft (32a), als Außenkant (42d) und/oder als ein SDS-Einsteckende (36c) ausgebildet ist.

3. Einsatzwerkzeug nach einem der vorhergehenden Ansprüche, **dadurch gekennzeichnet, dass** der Schneidkörper (22) zumindest teilweise, insbesondere vollständig, aus einem Hartmetall besteht.

4. Einsatzwerkzeug nach einem der vorhergehenden Ansprüche, **dadurch gekennzeichnet, dass** der Schneidkörper (22) über ein Schleifverfahren derart bearbeitet ist, dass der Schneidkörper (22) zumindest zwei Schleifflächen (23a-c) aufweist, wobei die zumindest zwei Schleifflächen (23a-c) vorzugsweise als Spanflächen ausgebildet sind.

5. Einsatzwerkzeug nach Anspruch 4, **dadurch gekennzeichnet, dass** zumindest eine Schleiffläche (23a-c) als eine Freifläche ausgebildet ist.

6. Einsatzwerkzeug nach einem der Ansprüche 4 oder 5, **dadurch gekennzeichnet, dass** der Schneidkörper (22) vier Schleiffläche (23b) oder sieben Schleifflächen (23c) aufweist.

7. System aus zumindest einem ersten Einsatzwerkzeug (100) gemäß einem der vorhergehenden Ansprüche und einem zweiten Einsatzwerkzeug gemäß einem der vorhergehenden Ansprüche, wobei die Basismodule (10) der Einsatzwerkzeuge (100) im Wesentlichen identisch ausgebildet sind,
**dadurch gekennzeichnet, dass**
die Basismodule (10) der Einsatzwerkzeuge (100) mit unterschiedlichen Einsteckenden (30a-d) stoffschlüssig verbunden sind und/oder die Schneidkörper (22a-c) über unterschiedliche Schleifverfahren bearbeitet sind.

8. System nach Anspruch 7, **dadurch gekennzeichnet, dass** die Einsatzwerkzeuge (100) sich unterscheidende Oberflächenkennzeichnungen (56) aufweisen.

9. Verfahren zur Herstellung eines Einsatzwerkzeugs (100), in welchem in einer ersten Verfahrensstufe (202) ein Basismodul (10), der einen insbesondere eine Förderwendel (16) umfassenden Grundkörper (13) und einen Schneidkörper (22) aufweist, bereitgestellt wird,
und
in einer zweiten Verfahrensstufe über jeweils zumindest einen Verfahrensschritt (204, 206, 208) das Basismodul (10) auf eine Handwerkzeugmaschine, auf ein zu bearbeitendes Werkstück und mit einer Oberflächenkennzeichnungen (56) angepasst wird.

10. Verfahren zur Anpassung einer zweiten Verfahrensstufe gemäß Anspruch 9, wobei ein Datensatz, der Informationen zur Anpassung eines Basismoduls (10) auf eine Handwerkzeugmaschine, auf ein zu bearbeitendes Werkstück und der Oberflächenkennzeichnung (56) von einer Recheneinheit bereitgestellt wird oder einer Recheneinheit bereitgestellt wird.
